(19) Europäisches Patentamt
European Patent Office
Office européen des brevets

(11) Veröffentlichungsnummer: **0 143 396 B1**

# (12) EUROPÄISCHE PATENTSCHRIFT

(45) Veröffentlichungstag der Patentschrift: **13.03.91**

(51) Int. Cl.5: **C08G 18/40**, C08J 3/11, C08L 67/06, C08L 71/02

(21) Anmeldenummer: **84113763.1**

(22) Anmeldetag: **14.11.84**

Die Akte enthält technische Angaben, die nach dem Eingang der Anmeldung eingereicht wurden und die nicht in dieser Patentschrift enthalten sind.

## (54) Kristallitsuspensionen aus kristallinen, ethylenisch ungesättigten Polyestern und Polyhydroxylverbindungen, Verfahren zu deren Herstellung und deren Verwendung zur Herstellung von Polyurethan- oder Polyurethangruppen enthaltenden Polyisocyanurat-Kunststoffen.

(30) Priorität: **23.11.83 DE 3342177**

(43) Veröffentlichungstag der Anmeldung: **05.06.85 Patentblatt 85/23**

(45) Bekanntmachung des Hinweises auf die Patenterteilung: **13.03.91 Patentblatt 91/11**

(84) Benannte Vertragsstaaten: **AT BE CH DE FR GB IT LI NL SE**

(56) Entgegenhaltungen:
**EP-A- 0 017 111**
**EP-A- 0 032 380**
**EP-A- 0 108 177**
**US-A- 2 889 292**

(73) Patentinhaber: **BASF Aktiengesellschaft**
**Carl-Bosch-Strasse 38**
**W-6700 Ludwigshafen(DE)**

(72) Erfinder: **Horn, Peter, Dr.**
**Neue Stuecker 15**
**W-6900 Heidelberg(DE)**
Erfinder: **Hesse, Anton, Dr.**
**Peter-Nickel-Strasse 15**
**W-6940 Weinheim(DE)**
Erfinder: **Mann, Walter**
**Kaethe-Kollwitz-Strasse 4a**
**W-6710 Frankenthal(DE)**
Erfinder: **Frank, Wolfram, Dr.**
**Bergstrasse 162**
**W-6900 Heidelberg(DE)**
Erfinder: **Marx, Matthias, Dr.**
**Seebacher Strasse 49**
**W-6702 Bad Duerkheim(DE)**
Erfinder: **Heckmann, Walter, Dr.**
**Geiersbergstrasse 2**
**W-6940 Weinheim(DE)**

EP 0 143 396 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Dispersionen von aromatischen Polyestern in bei Raumtemperatur flüssigen Polyhydroxylverbindungen und deren Verwendung zur Herstellung von gegebenenfalls zelligen Polyurethan- und/oder Polyisocyanuratkunststoffen sind bekannt.

Nach Angaben der EP-OS 17 111 werden die Dispersionen durch Schmelzdispergierung unter hohem Schergefälle hergestellt. Charakteristisch hierbei ist, daß die disperse Phase bei der Polyurethanherstellung nicht in das Polymergerüst eingebunden wird, sondern als verstärkend wirkender Füllstoff im Formteil vorliegt. Kennzeichnend hierfür ist, daß die Temperatur bei der Polyurethanreaktion so zu wählen ist, daß der Schmelzpunkt der Kristalle nicht erreicht wird.

Kristallitsuspensionen werden auch in der EP-OS 32 380 beschrieben. Die Kristallitsuspensionen besitzen weiche Polyole als kohärente Phase, die als disperse Phase harte, kristalline organische Verbindungen mit mindestens einem Zerewitinoff-aktiven Wasserstoffatom, Schmelzpunkten von 30 bis 260°C und Molekulargewichten von 178 bis ungefähr 100 000 enthalten. Das Verfahren weist den Vorteil auf, daß die harte, kristalline organische Verbindung gezielt steuerbar durch ihren Schmelzpunkt bzw. den Übergang von der dispersen in die kohärente Phase in das Polyurethangerüst eingebaut werden kann. Dadurch können die bereits ausgebildeten Zellmembranen zusätzlich gefestigt werden. Nachteilig ist an diesem Verfahren, daß die Kristallitsuspensionen nur schwer reproduzierbar sind.

Eine Verbesserung bezüglich einer reproduzierbaren Herstellung lagerstabiler Kristallitsuspensionen wird in der EP-OS 62 204 beschrieben. Bei genauer Einhaltung der Reaktionsbedingungen, wie z.B. Rührgeschwindigkeit, Temperatur-Zeit-Diagramm u.a., werden stabile Kristallitsuspensionen erhalten, deren disperse Phase zu über 50 Gew.% in einer Teilchengröße von 10,5 bis 100µm vorliegt. Gelegentlich entstehen jedoch durch zufallsbedingte Produktionsschwankungen Kristallitsuspensionen, bei denen die Teilchengröße der dispergierten Polyester zu mehr als 50 Gew.% kleiner als 10µm ist, so daß beim Lagern der Kristallitsuspension aufgrund thixotroper Effekte eine Verdickung auftritt. Derartige Kristallitsuspensionen sind nicht mehr zu Kunststoffen nach dem Isocyanatpolyadditionsverfahren verarbeitbar.

Nachteilig ist ferner, daß Kristallitsuspensionen nach EP-OS 62 204 bei der Verarbeitung zu Polyurethangruppen enthaltenden Polyisocyanuratschaumstoffen dazu neigen qualitätsvermindernde Lunker zu bilden.

Die genannten Kristallitsuspensionen weisen ferner alle den Nachteil auf, daß aus ihnen hergestellte Polyurethan- oder Polyurethangruppen enthaltende Polyisocyanurat-Kunststoffe beim Verbrennen eine verhältnismäßig hohe Rauchgasdichte ergeben.

Aufgabe der vorliegenden Erfindung war es, ein Verfahren zur problemlosen Herstellung von Kristallitsuspensionen zu entwickeln, die zu feinzelligen und abriebfesten Polyurethan- bzw. Polyurethangruppen aufweisenden Polyisocyanurat-Kunststoffen verarbeitet werden können, wobei insbesondere die Lunkerbildung bei der diskontinuierlichen Herstellung von Blockschaumstoffen auf ein Minimum reduziert werden sollte. Zur Herstellung von hochdichten Polyurethan- oder Polyurethangruppen enthaltenden Polyisocyanurat-Formkörpern oder dicken Sandwichelementen sollte der Anteil an disperser Phase in der Kristallitsuspension erhöht werden. Ferner sollte die Druckfestigkeit der unter Verwendung der Kristallitsuspensionen erhaltenen Formkörper verbessert werden. Der Gehalt an üblichen reaktiven und/ oder nichtreaktiven Flammschutzmittel in Polyurethan- oder Polyurethangruppen enthaltenden Polyisocyanuratkunststoffen sollte vermindert und die Rauchgasdichte im Brandfalle deutlich reduziert werden.

Diese Aufgaben konnten überraschenderweise mit Hilfe der erfindungsgemäßen Kristallitsuspensionen gelöst werden.

Gegenstand der Erfindung sind somit Kristallitsuspensionen, die enthalten

a) 3 bis 70 Gew.% eines kristallinen, ethylenisch ungesättigten Polyesters, hergestellt durch Polykondensation von Fumarsäure und Ethylenglykol im Molverhältnis 1:1,2 bis 2, wobei bis zu 18 Mol.% der Fumarsäure durch aliphatische, cycloaliphatische und/oder aromatische Carbonsäuren und bis zu 20 Mol.% des Ethylenglykols durch andere Alkohole ersetzt sein können, mit einem Molekulargewichtsfaktor pro Doppelbindung von 154,4 bis 408 als disperse Phase und

b) 30 bis 97 Gew.% einer Polyhydroxylverbindung mit einer Funktionalität von 2 bis 8, einer Hydroxylzahl von 20 bis 800 und einem Schmelzpunkt unter 30°C als kohärente Phase,

wobei die Gewichtsprozente bezogen sind auf das Gesamtgewicht der Komponenten (a) und (b).

Gegenstand der Erfindung ist ferner ein Verfahren zur Herstellung von Kristallitsuspensionen, das dadurch gekennzeichnet ist, daß man

a) 3 bis 70 Gew.-Teile eines kristallinen, ethylenisch ungesättigten Polyesters, hergestellt durch Polykondensation von Fumarsäure und Ethylenglykol im Molverhältnis 1:1,2 bis 2, wobei bis zu 18 Mol.% der Fumarsäure durch aliphatische, cycloaliphatische und/oder aromatische Carbonsäuren und bis zu 20

Mol.% des Ethylenglykols durch andere Alkohole ersetzt sein können, mit einem Molekulargewichtsfaktor pro Doppelbindung von 154,4 bis 408 in

b) 30 bis 97 Gew.-Teile einer Polyhydroxylverbindung mit einer Funktionalität von 2 bis 8, einer Hydroxylzahl von 20 bis 800 und einem Schmelzpunkt unter 30 °C

bei Temperaturen von 35 bis 160 °C löst und die Lösung unter Einwirkung von Scherkräften zur Ausbildung der Kristallitsuspension abkühlen läßt.

Gegenstand der Erfindung ist schließlich auch die Verwendung der erfindungsgemäßen Kristallitsuspensionen zur Herstellung von kompakten oder zelligen Polyurethan- oder Polyurethangruppen enthaltenden Polyisocyanurat-Kunststoffen.

Die disperse Phase (a) der erfindungsgemäßen Kristallitsuspensionen besteht aus kristallinen, ethylenisch ungesättigten Polyestern, die hergestellt werden durch Polykondensation von Fumarsäure und Ethylenglykol im Molverhältnis von 1:1,2 bis 2, vorzugsweise 1:1,25 bis 1,8, mit einem Molekulargewichtsfaktor pro Doppelbindung von 154,4 bis 408, vorzugsweise von 160 bis 250. Geeignet sind ferner kristalline, ethylenisch ungesättigte Mischpolyester, bei denen bis zu 18 Mol.%, vorzugsweise von 5 bis 16 Mol.% der Fumarsäure durch aliphatische, cycloaliphatische und/oder aromatische Carbonsäuren mit 4 bis 36, vorzugsweise 4 bis 8 Kohlenstoffatomen und bis zu 20 Mol.%, vorzugsweise 5 bis 16 Mol.% des Ethylenglykols durch Alkohole mit 3 bis 36, vorzugsweise 4 bis 12 Kohlenstoffatomen ersetzt sind.

Zur Modifizierung der Ethylenglykolfumarsäure-Mischpolyester finden vorzugsweise gegebenenfalls ethylenisch ungesättigte und/oder gegebenenfalls chlor- und/oder bromsubstituierte Dicarbonsäuren Verwendung. Beispielhaft genannt seien aliphatische Dicarbonsäuren, wie z.B. Maleinsäure, Chlormaleinsäure, Itaconsäure, Bernsteinsäure, Glutarsäure und Adipinsäure, cycloaliphatische Dicarbonsäuren, wie z.B. Dihydro-, Tetrahydro-, Hexahydrophthalsäure, Tetrachlorphthalsäure, 3,6-Endomethylen-1,2,3,6-tetrahydrophthalsäure und Hexachlorendomethylen-tetrahydrophthalsäure und aromatische Dicarbonsäuren, wie z.B. o-Phthalsäure, Isophthalsäure und Terephthalsäure. Geeignet als Modifizierungsmittel sind jedoch auch ein-, drei- und höherbasische Carbonsäuren, wie z.B. Ethyl-hexansäure, Fettsäuren mit 10 bis 20 Kohlenstoffatomen, Methacrylsäure, Benzoesäure, 1,2,4-Benzol-tricarbonsäure und 1,2,4,5-Benzol-tetracarbonsäure. Die Carbonsäuren können sowohl einzeln als auch in Form von Mischungen eingesetzt werden. Anstelle der freien Carbonsäuren sind ferner die entsprechenden Carbonsäurederivate, wie z.B. Carbonsäurealkylester mit 1 bis 4 Kohlenstoffatomen im Alkylrest oder vorzugsweise Carbonsäureanhydride verwendbar. Vorzugsweise verwendet werden Maleinsäure, Adipinsäure und Terephthalsäure.

Nach einer anderen Verfahrensweise können zur Herstellung der kristallinen, ethylenisch ungesättigten Polyester anstelle von Fumarsäure oder -derivaten auch Maleinsäure oder Maleinsäurederivate, vorzugsweise Maleinsäureanhydrid verwendet werden, wobei jedoch die Maleinsäure und/oder -derivate vor oder während der Polyesterherstellung nach bekannten Verfahren mit einer Ausbeute von über 82 % in die trans-Form isomerisiert werden müssen.

Wie bereits dargelegt wurde, können die kristallinen, ethylenisch ungesättigten Polyester auch durch einen teilweisen Ersatz des Ethylenglykols durch Alkohole modifiziert werden. Besonders bewährt haben sich hierfür und daher vorzugsweise verwendet werden aliphatische und/oder cycloaliphatische Diole mit 3 bis 36 Kohlenstoffatomen, die gegebenenfalls auch Ethergruppen als Brückenglieder gebunden enthalten können. Im einzelnen seien beispielhaft genannt: Propandiol-1,3, 2,2-Dimethyl-propandiol-1,3, Butandiol-1,4, Butendiol-1,4, Butandiol-1,3, Hexandiol-1,6, Diethylenglykol, Dipropylenglykol, Cyclohexandiol-1,2 und -1,4, 2,2-Bis-(p-hydroxycyclohexyl)-propan und 4,4'-Dihydroxy-dicyclohexylmethan. Geeignet sind ferner ethoxylierte und/oder propoxylierte 4,4'-Dihydroxy-diphenylpropane-2,2 mit Molekulargewichten von 316 bis 492 sowie in untergeordneten Mengen ein-, drei- oder höherwertige Alkohole wie z.B. 2-Ethyl-hexanol, Fettalkohole mit 10 bis 20 Kohlenstoffatomen, Benzylalkohol, 1,2-Di-(allyloxy)-propanol-3, Glycerin und Trimethylolpropan. Vorzugsweise Verwendung finden n-Hexanol und 2-Ethylhexanol.

Die erfindungsgemäß verwendbaren kristallinen, ethylenisch ungesättigten Polyester werden im allgemeinen durch Schmelzkondensation oder Polykondensation unter azeotropen Bedingungen, gegebenenfalls in Gegenwart von Veresterungskatalysatoren und/oder in einer Inertgasatmosphäre, bei Temperaturen von 150 bis 220 °C aus den genannten Aufbaukomponenten nach kontinuierlichen oder diskontinuierlichen Verfahren hergestellt. Zur Verhinderung einer vorzeitigen, unerwünschten Gelierung der ungesättigten Polyester können der Polykondensationsmischung Inhibitoren einverleibt werden. Bewährt haben sich beispielsweise phenolische Inhibitoren, wie Hydrochinon oder dessen alkylsubstituierte Derivate.

Die kristallinen, ethylenisch ungesättigten Polyester besitzen eine Säurezahl von kleiner als 30, vorzugsweise kleiner als 20 und insbesondere kleiner als 5 und eine Hydroxylzahl von 90 bis 600, vorzugsweise von 120 bis 250. Das mittlere Molekulargewicht beträgt ungefähr 210 bis 3000, vorzugsweise 500 bis 2000 und der Molekulargewichtsfaktor pro Doppelbindung 154,5 bis 408, vorzugsweise 160 bis 250 und insbesondere 162 und 200.

Der Molekulargewichtsfaktor pro ethylenisch ungesättigter Doppelbindung wird erfindungsgemäß definiert als die Summe der Gewichtsmengen der Aufbaukomponenten pro Doppelbindung, abzüglich des bei der Polykondensation abgespaltenen Kondensationsproduktes. Diese Berechnung gilt auch dann, wenn statt der Carbonsäuren, Carbonsäureanhydride eingesetzt werden. Für einen ungesättigten Polyester aus Fumarsäure, Adipinsäure und Ethylenglykol im Molverhältnis 1,0:0,1:1,5 errechnet sich danach der Molekulargewichtsfaktor pro Doppelbindung auf folgende Weise: 1 Mol Fumarsäure (Molgewicht 116) besitzt die Gewichtsmenge 116 g, 0,1 Mole Adipinsäure (Molgewicht 146) besitzt eine Gewichtsmenge von 14,6 g und 1,5 Mole Ethylenglykol (Molgewicht 62) eine Gewichtsmenge von 93,0 g. Die Summe der Gewichtsmengen beträgt somit 223,6 g. Zieht man hiervon die Gewichtsmenge von 2,2 Holen Wasser (Molgewicht 18) gleich 39,6 g ab, so erhält man als Molekulargewichtsfaktor pro Doppelbindung 184,0 g.

Für die erfindungsgemäßen Kristallitsuspensionen eignen sich als kohärente Phase bei üblichen Verarbeitungstemperaturen für Polyurethane, z.B. bei 10 bis 30 °C, insbesondere 25 °C flüssige Polyhydroxylverbindungen (b) mit einer Funktionalität von 2 bis 8 und einer Hydroxylzahl von 20 bis 800. Verwendet werden können auch Mischungen aus solchen Polyhydroxylverbindungen (b) und löslichen, kristallinen Komponenten mit der Maßgabe, daß die Mischung homogen und in dem genannten Temperaturbereich flüssig ist.

Als Polyhydroxylverbindungen (b) in Betracht kommen beispielsweise: Polyester-polyole mit Funktionalitäten von 2 bis 6, vorzugsweise 2 bis 4, Hydroxylzahlen von 20 bis 700, vorzugsweise von 280 bis 490 und Säurezahlen kleiner als 30, vorzugsweise kleiner als 5, auf Basis von organischen Dicarbonsäuren, vorzugsweise aliphatischen Dicarbonsäuren mit 2 bis 12, vorzugsweise 4 bis 8 Kohlenstoffatomen im Alkylenrest und mehrwertigen Alkoholen, vorzugsweise Diolen mit 2 bis 10, vorzugsweise 2 bis 6 Kohlenstoffatomen. Genannt seien beispielsweise aliphatische Dicarbonsäuren, wie Bernsteinsäure, Glutarsäure, Pimelinsäure, Undecandisäure, Dodecandisäure, Fumarsäure, Maleinsäure, Chlormaleinsäure, Itaconsäure und vorzugsweise Adipinsäure und aromatische Dicarbonsäuren, wie Phthalsäure und Terephthalsäure. Beispiele für zwei- und mehrwertige, insbesondere zweiwertige Alkohole sind: 1,2- bzw. 1,3-Propylenglykol, Dipropylenglykol, 1,5-Pentamethylenglykol, 1,8-Octamethylenglykol, Decamethylenglykol-1,10, Glycerin, Trimethylolpropan, Pentaerythrit sowie Zuckeralkohole, z.B. Sorbit und vorzugsweise Ethylenglykol, Diethylenglykol, 1,4-Butylenglykol und 1,6-Hexamethylenglykol. Als mehrwertige Alkohole können ferner Alkanolamine, Dialkanolamine und Trialkanolamine, z.B. Ethanolamin, Diethanolamin, Triethanolamin und Triisopropanolamin verwendet werden. Die genannten Dicarbonsäuren und mehrwertigen Alkohole können auch in Form von Mischungen eingesetzt werden. Besonders bewährt haben sich und daher vorzugsweise verwendet werden Polyester-polyole aus Adipinsäure oder Mischungen aus Bernstein-, Glutar- und Adipinsäure und Diethylenglykol und Alkoholmischungen aus 1,4-Butylen-/1,5-Pentamethylen-/1,6-Hexamethylenglykol, Ethylenglykol/1,4-Butylenglykol, Ethylenglykol/Diethylenglykol, Ethylenglykol/Trimethylolpropan, Diethylenglykol/Trimethylolpropan, Ethylenglykol/Pentaerythrit, Ethylenglykol/Triisopropanolamin und Diethylenglykol/ Triisopropanolamin.

Die Polyester-polyole besitzen Molekulargewichte von ungefähr 220 bis 3000 und vorzugsweise von 300 bis 800.

Anstelle der genannten Polyester-polyole, die einzeln oder als Gemische eingesetzt werden können, können auch homogene, bei 10 bis 30 °C flüssige Mischungen aus den oben genannten Polyester-polyolen und löslichen kristallinen organischen Komponenten, z.B. hydroxylgruppenhaltigen Polyestern aus aromatischen Dicarbonsäuren und vorzugsweise unsubstituierten, linearen Diolen, Anwendung finden.

Vorzugsweise als Polyhydroxylverbindungen (b) für die kohärente Phase verwendet werden jedoch Polyether-polyole mit Funktionalitäten von 2 bis 8, vorzugsweise 2 bis 4 und Hydroxylzahlen von 20 bis 800, vorzugsweise von 25 bis 700, die nach bekannten Verfahren, beispielsweise durch anionische Polymerisation mit Alkalihydroxiden, wie Natrium- oder Kaliumhydroxid oder Alkalialkoholaten, wie Natriummethylat, Kalium- oder Natriumethylat oder Kaliumisopropylat als Katalysatoren oder durch kationische Polymerisation mit Lewissäuren, wie Antimonpentachlorid, Borfluorid-Etherat u.a. als Katalysatoren aus einem oder mehreren Alkylenoxiden mit 2 bis 4 Kohlenstoffatomen im Alkylenrest und gegebenenfalls einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'- 2,4'- und 2,2'-Diamino-diphenylmethan. Als Polyether-polyole, hergestellt aus Verbindungen der erwähnten Gruppe sind besonders interessant N,N,N',N'-Tetrakis-(2-hydroxyethyl)-ethylendiamin, N,N,N',N'-Tetrakis-(2-hydroxypropyl)-ethylendiamin, N,N,N',N",N"-Pentakis-(2-hydroxypropyl)-diethylentriamin, Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethylethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylol-propan, Pentaerythrit, Sorbit und Saccharose.

Die Polyether-polyole besitzen Molekulargewichte von 200 bis 7000 und vorzugsweise von 500 bis 6500. Sie können ebenso wie die Polyester-polyole einzeln oder in Form von Mischungen verwendet werden.

Als kohärente Phase verwendet werden können auch Mischungen aus Polyester-polyolen und Polyether-polyolen sowie hydroxylgruppenhaltige Polyesteramide und Polyacetale und deren Gemische, sofern sie den oben genannten Bedingungen entsprechen.

Die erfindungsgemäßen Kristallitsuspensionen enthalten als disperse Phase 3 bis 70 Gew.%, vorzugsweise 10 bis 50 Gew.% und insbesondere 15 bis 40 Gew.%, bezogen auf das Gesamtgewicht der Komponenten (a) und (b), mindestens eines kristallinen, ethylenisch ungesättigten Polyesters (a) und 30 bis 97 Gew.%, vorzugsweise 50 bis 90 Gew.% und insbesondere 60 bis 85 Gew.%, bezogen auf das Gesamtgewicht der Komponenten (a) und (b) als kohärente Phase mindestens eine Polyhydroxylverbindung (b).

Zu ihrer Herstellung werden die kristallinen, ethylenisch ungesättigten Polyester (a) und Polyhydroxylverbindungen (b) gemischt und bis zur Bildung einer klaren Lösung erwärmt. Hierzu sind üblicherweise Temperaturen von 35 bis 160 °C, vorzugsweise 80 bis 150 °C ausreichend. Danach läßt man die klare Lösung unter Rühren und Einwirkung von starken Scherkräften zur Ausbildung der Kristallitsuspension abkühlen. Die Abkühlung auf 25 °C erfolgt im allgemeinen über einen Zeitraum von 4 bis 20 Stunden, vorzugsweise 6 bis 18 Stunden.

Die erfindungsgemäßen Kristallitsuspensionen können direkt zu Polyurethan-oder Polyurethangruppen enthaltenden Polyisocyanurat-Kunststoffen verarbeitet werden. Sie können jedoch auch durch Zusatz von Aminen, Dialkylentriaminen und/oder Alkanolaminen, Halogenkohlenwasserstoffen, ethylenisch ungesättigten monomeren Verbindungen und/oder Radikalbildnern modifiziert und dadurch für bestimmte Anwendungsgebiete zusätzlich verbessert werden.

Als Modifizierungsmittel geeignet sind Amine, Dialkylentriamine und/oder Alkanolamine, die mit den ethylenisch ungesättigten Doppelbindungen der kristallinen Polyester (a) eine Additionsreaktion analog der Michael-Reaktion eingehen können. Besonders bewährt haben sich hierfür und daher vorzugsweise verwendet werden aliphatische, cycloaliphatische und/oder araliphatische Amine, insbesondere primäre und/oder sekundäre Mono- und/oder Diamine, Dialkylentriamine, Alkanolamine, vorteilhafterweise solche der Formel

$$H_2N-(CR^1R^2)_n-NR^3-(CR^1R^2)m-X,$$

in der bedeuten:

- $R^1$, $R^2$, $R^3$ gleiche oder verschiedene, lineare oder verzweigte Alkylreste mit 1 bis 4 Kohlenstoffatomen im Alkylrest, wie z.B. den Ethyl-, n-Propyl-, iso-Propyl-, n-Butyl-, sek.-Butyl-, tert.-Butyl- und vorzugsweise einen Methylrest oder ein Wasserstoffatom,
- X eine $NH_2$- oder OH-Gruppe,
- n eine ganze Zahl von 2 bis 12, vorzugsweise 2 bis 4 und
- m eine ganze Zahl von 2 bis 3.

Im einzelnen seien beispielhaft genannt: primäre oder sekundäre, aliphatische oder cycloaliphatische Monoamine mit 2 bis 20, vorzugsweise 4 bis 8 Kohlenstoffatomen, wie z.B. n- und iso-Propylamin, n- und sek-Butylamin, n-Pentylamin, n-Hexylamin, n-Octylamin, 2-Ethyl-1-hexylamin, 2-Ethyl-1-octylamin, Decylamin, Dodecylamin, Cyclohexylamin, Diisopropylamin, Dibutylamin, Ethyl-butylamin und N-Methyl-cyclohexylamin, primäre oder sekundäre, aliphatische oder cycloaliphatische Diamine mit 2 bis 20, vorzugsweise 2 bis 12 Kohlenstoffatomen, wie z.B. Ethylendiamin, 1,4-Butylendiamin, N,N'-Dimethyl-butylendiamin-1,4, N-Methylbutylendiamin-1,4, Hexamethylendiamin-1,6, N-Ethyl-hexamethylendiamin-1,6, Piperazin, 2,4- bzw. 2,6-Hexahydrotoluylen-diamin, 2,4'-, 2,2'- und 4,4'-Diamino-dicyclohexylmethan, Alkanolamine wie z.B. Ethanolamin, Diethanolamin, Propanolamin, Dipropanolamin, Aminoalkylalkanolamine, wie z.B. Aminoethyl-, Aminobutyl-, Aminohexylhexanolamin, Aminopropyl-, Aminobutylbutanolamin, Aminoisopropylethanolamin und vorzugsweise Aminoethylethanolamin und Aminoethylisopropanolamin und Dialkylentriamine, wie z.B. Ethylen-butylen-, Ethylen-hexamethylen-, Dihexamethylen-, Ethylenether-ethylen-, Propylenether-ethylentriamin und vorzugsweise Diethylentriamin, Di-1,3- oder -1,2-propylentriamin und Dibutylentriamine. Die Amine, Alkanolamine und/ oder Dialkylentriamine können einzeln oder in Form von Mischungen eingesetzt werden. Vorzugsweise Verwendung finden: Ethanolamin, Cyclohexylamin und 2-Methyl-5-amino-benzylamin.

Zur Herstellung der mit Additionsprodukten, erhalten analog der Michael-Reaktion, modifizierten Kristallitsuspension werden pro 100 Gew.-Teile Kristallitsuspensionen aus den Komponenten (a) und (b) 0,1 bis 7 Gew.-Teile, vorzugsweise 0,5 bis 5 Gew.-Teile und insbesondere 1,5 bis 3 Gew.-Teile Amin, Alkanolamin und/oder Dialkylentriamin in die Kristallitsuspension eingebracht und die Mischungen danach bei Temperaturen von 20 bis 80 °C, vorzugsweise von 30 bis 60 °C, gegebenenfalls unter Rühren, behandelt. Da die Addition der primären oder sekundären Aminogruppen an die ethylenisch ungesättigte Doppelbindung der Polyester (a) sehr rasch verläuft, sind bei den genannten Temperaturen Reaktionszeiten von 0,2 bis 4 Stunden, vorzugsweise 0,5 bis 2 Stunden ausreichend. Hierbei hat es sich als vorteilhaft erwiesen, die Additionsreaktion durch geeignete Wahl der Mengenverhältnisse der Aufbaukomponenten so zu führen, daß im wesentlichen keine Vernetzungsreaktion zwischen den Polyestern (a) eintritt.

Durch Verwendung der mit Aminen, Alkanolaminen und/oder Dialkylentriamin modifizierten Kristallitsuspensionen können in diskontinuierlichen Verfahren Polyurethangruppen enthaltende Polyisocyanuratschaumstoffblöcke bis zu 4 $m^3$ hergestellt werden, deren Grundflächen keine oder praktisch keine Fehlstellen aufweisen.

Zur weiteren Verbesserung der Flammbeständigkeit und zur Verminderung der Rauchgasdichte im Brandfalle von aus den erfindungsgemäßen Kristallitsuspensionen hergestellten Polyurethan- oder Polyurethangruppen enthaltenden Polyisocyanurat-Formkörper, können die erfindungsgemäßen Kristallitsuspensionen mit aliphatischen, cycloaliphatischen oder aromatischen Chlor- und/oder Bromkohlenwasserstoffen modifiziert werden, wobei die Wirksamkeit der genannten Zusätze noch durch die Mitverwendung von Radikalbildnern als Synergist erhöht werden kann. Als geeignete, vorzugsweise verwendbare Chlor- und/oder Bromkohlenwasserstoffe, die in einer Menge von 1 bis 50 Gew.-Teilen, vorzugsweise 5 bis 30 Gew.-Teilen, pro 100 Gew.-Teile Kristallitsuspension aus den Komponenten (a) und (b), eingesetzt werden können, seien beispielhaft genannt: Chlorparaffine mit einem Chlorgehalt von 20 bis 75 Gew.%, vorzugsweise 40 bis 70 Gew.%, Hexabromcyclododecan und/oder Oktabrombiphenyl.

Als Radikalbildner und Synergist kommen beispielsweise in Betracht: Azoverbindungen wie z.B. Azodiisobutyronitril und Azodicarbonsäureester und Peroxide, wie z.B. tert-Butylperbenzoat, Benzoylperoxid, Dicumylperoxid und Cyclohexanonperoxid. Als Radikalbildner geeignet sind ferner Startermoleküle mit labilen Kohlenstoff-Kohlenstoffbindungen sowie Lichtinitiatoren, die bei Einwirkung von Sonnenlicht und/oder Licht der Wellenlängen 300 bis 450 nm in Radikale zerfallen, wie z.B. Benzilketale, Benzoinether, Acylphosphinverbindungen und Naphthalinsulfonylchlorid. Sofern den erfindungsgemäßen Kristallitsuspensionen zusätzlich Radikalbildner einverleibt werden, werden diese üblicherweise in einer Menge von 0,05 bis 5 Gew.-Teilen, vorzugsweise von 0,1 bis 2 Gew.-Teilen pro 100 Gew.-Teilen Kristallitsuspension aus den Komponenten (a) und (b) verwendet.

Die erfindungsgemäßen Kristallitsuspensionen können, beispielsweise zur Erhöhung der Druckfestigkeit, ferner durch Zusatz von einer oder mehreren ethylenisch ungesättigten monomeren Verbindungen, die mit der ethylenisch ungesättigten Doppelbindung des Polyesters (a) copolymerisiert werden können, in einer Menge von 1 bis 50 Gew.-Teilen, vorzugsweise 3 bis 25 Gew.-Teilen pro 100 Gew.-Teile der Kristallitsuspension aus den Komponenten (a) und (b) verbessert werden. Als geeignet erwiesen sich beispielsweise Allyl- und vorzugsweise Vinylverbindungen. Im einzelnen seien beispielhaft genannt: Styrol, substituierte Styrole, wie z.B. p-Chlorstyrol oder Vinyltoluol, Ester der Acrylsäure und Methacrylsäure mit 1 bis 18 Kohlenstoffatomen enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester wie Ethylhexansäurevinylester, Vinylpivalat und andere. Desgleichen eignen sich Gemische der genannten olefinisch ungesättigten Monomeren. Bevorzugt geeignet als monomere Verbindungen sind Styrol, α-Methylstyrol, Chlorstyrol, Vinyltoluol, Divinylbenzol, Diallylphthalat und Triallylisocyanurat.

Die ethylenisch ungesättigten monomeren Verbindungen werden zweckmäßigerweise mit den obengenannten Radikalbildnern als Polymerisationskatalysatoren verwendet. Als geeignete Co-Beschleuniger können beispielsweise Kobaltnaphthenat oder -octoat eingesetzt werden.

Die erfindungsgemäßen Kristallitsuspensionen werden vorzugsweise zur Herstellung von kompakten oder insbesondere zelligen Polyurethan- oder Polyurethangruppen enthaltenden Polyisocyanurat-Kunststoffen verwendet.

Hierzu können die Kristallitsuspensionen direkt mit organischen Polyisocyanaten umgesetzt werden. Die stabilen Kristallitsuspensionen können jedoch auch gegebenenfalls vor der Verarbeitung mit den oben genannten Polyhydroxylverbindungen verdünnt, d.h. auf den optimalen Gehalt an kristallinen Polyestern (a) eingestellt werden.

Als Polyisocyanate kommen aliphatische, cycloaliphatische, araliphatische und vorzugsweise aromatische mehrwertige Isocyanate in Frage. Im einzelnen seien beispielhaft genannt: Alkylendiisocyanate mit 4 bis 12 Kohlenstoffatomen im Alkylenrest, wie 1,12-Dodecamethylen-diisocyanat, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocya natomethyl-cyclohexan (Isophoron-diisocyanat), 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Di- und Polyisocyanate, wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanatonaphthalin, Polyphenyl-polymethylen-polyisocyanate, 2,4,6-Triisocyanato-toluol und vorzugsweise Gemische aus Diphenylmethan-diisocyanaten und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d.h. Produkte die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 10 92 007, Allophanatgruppen aufweisende Polyisocyanate, wie sie z.B. in der britischen Patentschrift 994 890, den ausgelegten Unterlagen des belgischen Patents 761 626 und der NL-OS 71 02 524 beschrieben werden, Isocyanuratgruppen aufweisende Polyisocyanate wie sie z.B. in den DE-PS 10 22 789, 12 22 067 und 10 27 394 sowie den DE-OS 19 29 034 und 20 04 048 beschrieben werden, Urethangruppen aufweisende Polyisocyanate, wie sie z.B. in den ausgelegten Unterlagen des belgischen Patents 752 261 oder der US-PS 3 394 164 beschrieben werden, acylierte Harnstoffgruppen aufweisende Polyisocyanate z.B. gemäß DE-PS 12 30 778, Biuretgruppen aufweisende Polyisocyanate z.B. gemäß DE-PS 11 01 394 und GB-PS 889 050; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 10 72 956, der US-PS 3 567 765 und der DE-PS 12 31 688 genannt werden.

Vorzugsweise kommen jedoch zur Anwendung: urethangruppenhaltige Polyisocyanate, beispielsweise mit niedermolekularen Diolen, Triolen, Polyoxypropylenglykolen und/oder Polyoxyethylenglykolen modifiziertes 4,4'-Diphenylmethan-diisocyanat, Toluylen-diisocyanat oder Mischungen aus Diphenylmethan-diisocyanaten und Polyphenyl-polymethylen-polyisocyanaten, Carbodiimidgruppen und/oder Isocyanuratringe enthaltende Polyisocyanate, z.B. auf Diphenylmethan-diisocyanat und/oder Toluylendiisocyanat-Basis und insbesondere Toluylendiisocyanate, Diphenylmethan-diisocyanate, Mischungen aus Diphenylmethan-diisocyanaten und Polyphenyl-polymethylen-polyisocyanaten (Roh-MDI) und Gemische aus Toluylendiisocyanaten und Roh-MDI.

Zu Treibmitteln, welche zur Herstellung von zelligen Polyurethan-Elastomeren, Polyurethan- oder Polyurethangruppen enthaltenden Polyisocyanurat-Schaumstoffen verwendet werden können, gehört Wasser, das mit Isocyanatgruppen unter Bildung von Kohlendioxid reagiert. Die Wassermengen, die zweckmäßigerweise verwendet werden, betragen 0,1 bis 3 Gew.%, bezogen auf das Gewicht an Polyisocyanat, bzw. 0,1 bis 2 Gew.%, bezogen auf das Gesamtgewicht von Polyisocyanat und Kristallitsuspension. Gegebenenfalls können auch größere Wassermengen verwendet werden.

Andere verwendbare Treibmittel sind niedrig siedende Flüssigkeiten, die unter dem Einfluß der exothermen Polymerisation- bzw. Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der Schaumstoffe hängt ab von der Schaumdichte, die man erreichen will sowie gegebenenfalls von der Mitverwendung von Wasser.

Im allgemeinen liefern Mengen von 5 bis 40 Gew.-Teilen, bezogen auf 100 Gew.-Teile organisches Polyisocyanat, bzw. 2 bis 30 Gew.%, bezogen auf das Gesamtgewicht von Polyisocyanat und Kristallitsuspension, zufriedenstellende Ergebnisse. Zur Herstellung von Integralschaumstoffen werden nur inerte, niedrig siedende Flüssigkeiten verwendet.

Geeignete Katalysatoren zur Beschleunigung der Polyurethanbildung zwischen der Kristallitsuspension, gegebenenfalls Wasser und den Polyisocyanaten sind beispielsweise tertiäre Amine, wie Dimethylbenzylamin, N,N,N',N'-Tetramethyldiamino-diethylether, Bis-(dimethylaminopropyl)-harnstoff, N-Methyl- bzw. N-Ethylmorpholin, Dimethylpiperazin, 1,2-Dimethylimidazol, 1-Aza-bicyclo-(3,3,0)-octan und vorzugsweise Triethylendiamin, Metallsalze, wie Zinndioctoat, Bleioctoat, Zinn-diethylhexoat und vorzugsweise Zinn-(II)-salze und Dibutylzinndilaurat sowie insbesondere Mischungen aus tert. Aminen und organischen Zinnsalzen. Vorzugsweise verwendet werden 0,1 bis 5,0 Gew.% Katalysator auf Basis tertiärer Amine und/oder 0,01 bis 1,0 Gew.% Metallsalze, bezogen auf das Gewicht der Kristallitsuspension.

Zur Herstellung von isocyanuratgruppenhaltigen Schaumstoffen haben sich die üblichen Cyclisierungs- und Polymerisationskatalysatoren für Polyisocyanate bewährt. Als Beispiele seien genannt: starke Basen, wie quarternäre Ammoniumhydroxide, beispielsweise Benzyltrimethylammoniumhydroxid; Alkalimetallhydroxide, beispielsweise Natrium- oder Kaliumhydroxid; Alkalimetallalkoxide, beispielsweise Natriummethylat und Kaliumisopropylat; Trialkylphosphine, beispielsweise Triethylphosphin; Alkylaminoalkylphenole, beispielsweise 2,4,6-Tris-(dimethylaminomethyl)-phenol; 3- und/ oder 4-substituierte Pyridine, beispielsweise 3- oder 4-Methylpyridin; metall-organische Salze, beispielsweise Tetrakis-(hydroxyethyl)-natriumborat; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctoat, Kalium-2-ethyl-hexoat, Kaliumbenzoat, Natriumpikrat und Phthalimid-kalium. Vorzugsweise verwendet werden die stark basischen N,N',N"-Tris-(dialkylaminoalkyl)-s-hexahydrotriazine, beispielsweise das N,N',N"-Tris-(dimethylaminopropyl)-s-hexahydrotriazin, gegebenenfalls in Kombination mit aliphatischen niedermolekularen Mono- und/oder Dicarbonsäuren, beispielsweise Essigsäure und/oder Adipinsäure oder aromatischen Carbonsäuren, wie Benzoesäure.

Die geeignete Menge an Isocyanuratgruppen bildenden Katalysatoren ist abhängig von der Wirksamkeit des in Frage kommenden Katalysators. Im allgemeinen hat es sich als zweckmäßig erwiesen, 1 bis 15 Gew.-Teile, vorzugsweise 3,5 bis 10 Gew.-Teile Katalysator für jeweils 100 Gew.-Teile an organischem Polyisocyanat zu verwenden.

Zur Herstellung von urethangruppenhaltigen Polyisocyanuratschaumstoffen können die die Urethan- und Isocyanuratgruppenbildung fördernde Katalysatoren auch gemischt werden.

Der gegebenenfalls schaumfähigen Reaktionsmischung aus Polyisocyanat, Kristallitsuspension und Katalysator sowie gegebenenfalls Treibmittel können, wie bereits ausgeführt wurde, gegebenenfalls noch Hilfs- und Zusatzstoffe einverleibt werden. Genannt seien beispielsweise Kettenverlängerungsmittel, organische und anorganische Füllstoffe, oberflächenaktive Schaumstabilisatoren, Hydrolyseschutzmittel, Porenregler, fungistatisch und bakteriostatisch wirkende Substanzen, Farbstoffe, Pigmente und Flammschutzmittel.

Die gegebenenfalls zellhaltigen Polyurethane oder Polyurethangruppen enthaltenden Polyisocyanurate können ohne zusätzliche Mitverwendung von üblichen Kettenverlängerungsmitteln oder Vernetzern hergestellt werden. Dennoch hat es sich in manchen Fällen, beispielsweise aus verarbeitungstechnischen Gründen, als zweckmäßig erwiesen, Kettenverlängerungsmittel oder Vernetzer einzusetzen. Geeignete Kettenverlängerungsmittel oder Vernetzer besitzen Molekulargewichte von 30 bis 600, vorzugsweise 60 bis 300 und weisen vorzugsweise zwei aktive Wasserstoffatome auf. In Betracht kommen beispielsweise aliphatische und/oder aromatische Diole mit 2 bis 14, vorzugsweise 2 bis 6 Kohlenstoffatomen, wie 1,2- bzw. 1,3-Propandiol, Pentandiol-1,5, Hexandiol-1,6 und vorzugsweise Ethandiol, Butandiol-1,4 und Bis-(2-hydroxyethyl)-hydrochinon, Diamine, wie Ethylendiamin und gegebenenfalls 3,3'- bzw. 3,3',5,5'-di- bzw. -tetraalkylsubstituierte 4,4'-Diaminodiphenylmethane, Ethanolamine, wie Triethanolamin und mehrwertige Alkohole, wie Glycerin, Trimethylolpropan und niedermolekulare Polyoxyalkylen-polyole aus den vorgenannten Ausgangsstoffen. Ferner heterocyclische Verbindungen wie Tris-(hydroxyalkyl)-isocyanurate, vorzugsweise Tris-(ß-hydroxyethyl)-isocyanurat, und deren Alkylierungsprodukte, vorzugsweise Ethoxy- und/oder Propoxylierungsprodukte.

Als Hilfsmittel genannt seien ferner beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,1 bis 5 Gew.-Teilen pro 100 Gew.-Teile der Mischung aus Polyisocyanat und Kristallitsuspension angewandt werden.

Geeignete Flammschutzmittel sind beispielsweise Trikresylphosphat, Tris-2-chlorethylphosphat, Tris-chlorpropylphosphat und Tris-2,3-dibrompropylphosphat, bromierte und chlorierte Polyether, Umsetzungsprodukte von bromierten und/oder chlorierten aromatischen Dicarbonsäureanhydriden mit bi- und höherfunktionellen Alkoholen wie beispielsweise Ethylenglykol, Diethylenglykol und Glycerin.

Außer den bereits genannten halogensubstituierten Phosphaten können auch anorganische Flammschutzmittel, wie Antimontrioxid, Arsenoxid, Ammoniumphosphat, Ammoniumsulfat, Alkalimetallsalze der unterphosphorigen Säure, Aluminiumoxihydrat und elementarer Phosphor, Harnstoff sowie Isocyanursäurederivate, wie Melamin, Dicyan-diamid und Guanidinsalze, z.B. Guanidincarbonat, zum Flammfestmachen der Schaumstoffe verwendet werden. Im allgemeinen hat es sich als vorteilhaft erwiesen, 5 bis 50 Gew.-Teile, vorzugsweise 5 bis 25 Gew.-Teile der genannten Flammschutzmittel für jeweils 100 Gew.-Teile der Mischung aus organischem Polyisocyanat und Kristallitsuspension zu verwenden.

Nähere Angaben über die oben genannten anderen üblichen Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964 zu entnehmen.

Zur Herstellung von Polyurethanschaumstoffen werden die organischen Polyisocyanate und Kristallitsuspensionen bzw. Mischungen aus Kristallitsuspensionen und zusätzlichen Polyester- und/oder Polyetherpolyolen in solchen Mengen zur Umsetzung gebracht, daß das Verhältnis von reaktiven Wasserstoffatomen zu NCO-Gruppen 1:0,8 bis 2,5, vorzugsweise 1:0,9 bis 1,2 und insbesondere ungefähr 1:1 ist und der Anteil an Polyester (a) als disperse Phase in der schaumfähigen Reaktionsmischung 0,5 bis 30 Gew.%, vorzugsweise 1 bis 26 Gew.%, bezogen auf das Gesamtgewicht an Polyhydroxylverbindungen und gegebenenfalls Kettenverlängerungsmitteln oder Vernetzern beträgt.

Zur Herstellung von urethangruppenhaltigen Polyisocyanuratschaumstoffen haben sich Mengenverhältnisse von NCO-Gruppen der Polyisocyanate zu reaktiven Wasserstoffatomen der Kristallitsuspension von 2 bis 60:1, vorzugsweise von 2 bis 10:1 bewährt. Der Anteil an Polyester (a) als disperse Phase in der schaumfähigen Reaktionsmischung beträgt auch hier 0,5 bis 30 Gew.%, vorzugsweise 1 bis 26 Gew.%, bezogen auf das Gesamtgewicht an Polyhydroxylverbindungen und gegebenenfalls Kettenverlängerungsmitteln oder Vernetzern.

Die urethan- und/oder isocyanuratgruppenhaltigen Schaumstoffe werden vorzugsweise nach dem one shot-Verfahren hergestellt. Hierzu mischt man die Polyisocyanate mit der erfindungsgemäßen Kristallitsuspension, den Katalysatoren, Treibmittel und gegebenenfalls Hilfs- und Zusatzstoffen intensiv in den genannten Mengenverhältnissen bei Temperaturen von 0 bis 50 °C, vorzugsweise 15 bis 40 °C, und läßt danach die Reaktionsmischung in offenen oder geschlossenen Formen aufschäumen.

Die erfindungsgemäß hergestellten Polyurethanschaumstoffe besitzen bei freier Aufschäumung Dichten von 10 bis 300 g/l, vorzugsweise von 60 bis 130 g/l. Die urethangruppenhaltigen Polyisocyanuratschaumstoffe besitzen Dichten von 5 bis 100 g/l, vorzugsweise von 10 bis 50 g/l.

Die Schaumstoffe finden Verwendung als Isoliermaterialien in Kühlaggregaten, zum Verkleiden von Rohren und auf dem Bausektor.

Die in den Beispielen genannten Teile beziehen sich auf das Gewicht.

I <u>Herstellung von kristallinen, ethylenisch ungesättigten Polyestern</u>

<u>Beispiel 1</u>

Aus Fumarsäure und Ethylenglykol im Molverhältnis 1:1,35 wurde in Gegenwart von 200 ppm Hydrochinon durch Schmelzkondensation ein ethylenisch ungesättigter Polyester hergestellt, der nach 3tägigem Lagern bei 40 °C zu einer farblosen Masse kristallisierte.

Das Produkt besaß eine Säurezahl von 2,6, eine Hydroxylzahl von 167 (nach der $BF_3$-Methode) und eine Schmelzviskosität bei 150 °C von 100 m.Pa.s. Der rechnerisch ermittelte Molekulargewichtsfaktor pro Doppelbindung betrug 163,7.

<u>Beispiel 2</u>

Aus Fumarsäure, Bernsteinsäure und Ethylenglykol im Molverhältnis 0,85: 0,15:1,35 wurde analog Beispiel 1 ein ungesättigter Polyester kondensiert, dernach 3tägigem Lagern bei 40 °C zu einer farblosen Masse kristallisierte.

Der ungesättigte Polyester hatte eine Säurezahl von 2,6, eine Hydroxylzahl von 167 (nach der $BF_3$-Methode) und eine Schmelzviskosität bei 150 °C von 100 m.Pa.s. Der rechnerisch ermittelte Molekulargewichtsfaktor pro Doppelbindung betrug 192,9.

Vergleichsbeispiel A

Aus Fumarsäure und Butandiol-1,4 im Molverhältnis 1:1,35 wurde in Gegenwart von 100 ppm Hydrochinon ein ethylenisch ungesättigter Polyester durch Schmelzkondensation hergestellt, der innerhalb 24 Stunden bei Raumtemperatur zu einer farblosen Masse kristallisierte.

Der ungesättigte Polyester besaß eine Säurezahl von 5,5, eine Hydroxylzahl von 123 (nach der $BF_3$-Methode) und eine Schmelzviskosität bei 150° C von 210 m.Pa.s. Der rechnerisch ermittelte Molekulargewichtsfaktor pro Doppelbindung betrug 201,5.

Vergleichsbeispiel B

Aus Fumarsäure und Hexandiol-1,6 im Molverhältnis 1:1,8 wurde analog dem Vergleichsbeispiel A ein kristalliner, ethylenisch ungesättigter Polyester hergestellt, der eine Säurezahl von 4,5, eine Hydroxylzahl von 300 (nach der $BF_3$-Methode) und eine Schmelzviskosität bei 75° C von 155 m.Pa.s besaß. Der rechnerisch ermittelte Molekulargewichtsfaktor pro Doppelbindung betrug 292,4.

II Als kohärente Phase fanden folgende Polyhydroxylverbindungen (b) Verwendung:

IIa Polyether-polyol mit einer Hydroxylzahl von 400, hergestellt aus Sucrose als Startermolekül und 1,2-Propylenoxid

IIb Polyester-polyol mit einer Hydroxylzahl von 344 und einer Säurezahl von 0,4, hergestellt durch Polykondensation einer Dicarbonsäuremischung aus Bernstein-, Glutar- und Adipinsäure und Ethylenglykol

IIc Polyester-polyol mit einer Hydroxylzahl von 354 und einer Säurezahl von 0,9, hergestellt durch Polykondensation einer Dicarbonsäuremischung aus Bernstein-, Glutar- und Adipinsäure und Diethylenglykol.

IId Ethylenglykolphthalat mit einer Hydroxylzahl von 294 und einer Säurezahl von 1,56.

IIe Diethylenglykoladipat mit einer Hydroxylzahl von 348 und einer Säure-zahl von 2,8.

III Herstellung von Kristallitsuspensionen

Beispiel 3

Eine Mischung aus
41,74 Teilen des Polyether-polyols IIa,
24,35 Teilen des Polyester-polyols IIb,
20,78 Teilen des Polyesters nach Beispiel 1 und
13,04 Teilen Tris-(ß-chlorethyl)-phosphat
wurde in einem 2-l-Vierhalskolben unter Rühren auf 127° C erwärmt bis eine völlig klare Lösung vorlag. Die Lösung ließ man unter Rühren mit einer Rührerdrehzahl von 400 Upm in 5 Stunden auf 32° C abkühlen. Man erhielt eine gut fließfähige Kristallitsuspension mit einer Hydroxylzahl von 264 und einer Säurezahl von 1,1.

Beispiel 4

Analog den Angaben von Beispiel 3 wurde eine gut fließfähige Kristallitsuspension mit einer Hydroxylzahl von 257 und einer Säurezahl von 1,2 aus folgenden Aufbaukomponenten hergestellt:
41,74 Teilen des Polyether-polyols IIa,
12,175 Teilen des Polyester-polyols IIb,
12,175 Teilen Ethylenglykolphthalat IId,
20,87 Teilen des Polyesters nach Beispiel 1 und
13,04 Teilen Tris-(ß-chlorethyl)phosphat.

Beispiel 5

Eine Mischung aus
41,74 Teilen des Polyether-polyols IIa,

20,87 Teilen des Polyesters nach Beispiel 1 und
13,04 Teilen Tri-(ß-chlorethyl)-phosphat
wurde in einem 2-1-Vierhalskolben unter Rühren auf 127°C bis zur Bildung einer klaren Lösung erwärmt. Die Lösung ließ man unter Rühren mit einer Rührerdrehzahl von 400 Upm in 5 Stunden auf 32°C abkühlen. Bei dieser Temperatur wurden 24,35 Teile des Polyester-polyols IIb hinzugefügt und weitere 3 Stunden gerührt.

Man erhielt eine gut fließfähige, lagerstabile Kristallitsuspension mit einer Hydroxylzahl von 262 und einer Säurezahl von 1,2.

Beispiel 6

Eine Mischung aus
36,92 Teilen des Polyether-polyols IIa,
30,0 Teilen des Polyesters nach Beispiel 1 und
11,54 Teilen Tris-(ß-chlorethyl)-phosphat
wurde analog Beispiel 5 erwärmt und in 5 Stunden auf 30°C abgekühlt. Bei dieser Temperatur wurden 21,54 Teile des Polyester-polyols IIb hinzugefügt und weitere 3 Stunden gerührt.

Man erhielt eine fließfähige, lagerstabile Kristallitsuspension mit einer Hydroxylzahl von 256 und einer Säurezahl von 1,3.

Beispiel 7

Eine Mischung aus
31,65 Teilen des Polyether-polyols IIa,
40 Teilen des Polyesters nach Beispiel 1 und
9,89 Teilen Tris-(ß-chlorethyl)-phosphat
wurde analog Beispiel 5 erwärmt auf 127°C und in 5 Stunden auf 30°C abgekühlt. Bei dieser Temperatur wurden 18,46 Teile des Polyester-polyols IIb hinzugefügt und weitere 3 Stunden gerührt.

Man erhielt eine gut fließfähige, lagerstabile Kristallitsuspension mit einer Hydroxylzahl von 242 und einer Säurezahl von 1,9.

Beispiel 8

100 Teile einer nach Beispiel 7 hergestellten Kristallitsuspension wurden bei 25°C mit 91 Teilen einer Mischung, bestehend aus
48,35 Teilen des Polyether-polyols IIa,
28,21 Teilen des Polyester-polyols IIb und
15,1 Teilen Tris-(ß-chlorethyl)-phosphat
versetzt.

Man erhielt eine lagerstabile, gut fließfähige Kristallitsuspension mit einer Hydroxylzahl von 261 und einer Säurezahl von 1,1.

Beispiel 9

Eine Mischung aus
41,74 Teilen des Polyether-polyols IIa,
20,87 Teilen des Polyesters nach Beispiel 2 und
13,04 Teilen Tris-(ß-chlorethyl)-phosphat
wurde analog Beispiel 5 auf 130°C erwärmt und in 5 Stunden auf 30°C abgekühlt. Bei dieser Temperatur wurden 24,35 Teile des Polyester-polyols IIb hinzugefügt und weitere 3 Stunden gerührt.

Man erhielt eine gut fließfähige, lagerstabile Kristallitsuspension mit einer Hydroxylzahl von 262 und einer Säurezahl von 1,1.

Beispiel 10

Eine Mischung aus
37,89 Teilen des Polyether-polyols IIa
40,0 Teilen des Polyesters nach Beispiel 2
22,11 Teilen des Polyester-polyols IIb
wurde in einem 2 1-Vierhalskolben unter Rühren auf 132° C erwärmt bis eine völlig klare Lösung vorlag. Die Lösung ließ man unter Rühren mit einer Rührerdrehzahl von 400 Upm in 8 Stunden auf Raumtemperatur abkühlen. Man erhielt eine gut fließfähige Kristallitsuspension mit einer Hydroxylzahl von 297 und einer Säurezahl von 2,0.

Beispiel 11

Eine Mischung aus
31,58 Teilen des Polyether-polyols IIa
50,0 Teilen des Polyesters nach Beispiel 2
18,42 Teilen des Polyester-polyols IIb
wurde in einem 2 1-Vierhalskolben unter Rühren auf 130° C erwärmt bis eine völlig klare Lösung vorlag. Die Lösung ließ man unter Rühren mit einer Rührerdrehzahl von 400 Upm in 7 Stunden auf Raumtemperatur abkühlen. Man erhielt eine fließfähige Kristallitsuspension mit einer Hydroxylzahl von 274 und einer Säurezahl von 2,0.

Vergleichsbeispiel C

Verfuhr man analog den Angaben der Beispiele 3 oder 5, verwendete jedoch anstelle des Polyesters nach Beispiel 1, Polyester hergestellt nach den Vergleichsbeispielen A oder B, so erhielt man steife, nicht fließfähige Kristallitsuspensionen.

Vergleichsbeispiel D

Eine Mischung aus
41,74 Teilen des Polyether-polyols IIa,
20,87 Teilen des Polyesters aus Vergleichsbeispiel A,
24,35 Teilen des Polyester-polyols IIc und
13,04 Teilen Tris-(ß-chlorethyl)-phosphat
wurden in einem 2 1-Vierhalskolben unter Rühren auf 145° C erwärmt bis eine völlig klare Lösung vorlag. Die Lösung ließ man unter Rühren mit einer Rührerdrehzahl von 400 Upm in 8 Stunden abkühlen. Man erhielt eine steife Kristallitsuspension.

Vergleichsbeispiel E

Eine Mischung aus
41,74 Teilen des Polyether-polyols IIa,
20,87 Teilen des Polyesters aus Vergleichsbeispiel B,
24,35 Teilen des Polyester-polyols IIc und
13,04 Teilen Tris-(ß-chlorethyl)-phosphat
wurden in einem 2 1-Vierhalskolben unter Rühren auf 100° C erwärmt bis eine völlig klare Lösung vorlag. Die Lösung ließ man unter Rühren mit einer Rührerdrehzahl von 400 Upm in 8 Stunden abkühlen. Man erhielt eine steife Kristallitsuspension.

IV Herstellung von erfindungsgemäßen, modifizierten Kristallitsuspensionen

Beispiel 12

100 Teilen einer Kristallitsuspension, hergestellt nach den Angaben von Beispiel 3, wurden bei 30 °C unter Rühren 0,42 Teile Cyclohexylamin einverleibt, wobei eine leichte Erwärmung der Reaktionsmischung eintrat. Die Reaktionsmischung wurde danach noch 3 Stunden bei 35 °C gerührt.

Beispiel 13

100 Teilen einer Kristallitsuspension, hergestellt nach den Angaben des Beispiels 3, wurden bei 30 °C 0,42 Teile tert.-Butylperbenzoat und 1,044 Teile Hexabromcyclododecan einverleibt. Die Reaktionsmischung wurde danach 3 Stunden bei 35 °C gerührt.

Beispiel 14

100 Teilen einer Kristallitsuspension, hergestellt nach den Angaben des Beispiels 3, wurden bei 30 °C 0,42 Teile tert.-Butylperoxid, 0,21 Teile Kobaltnaphthenat und 1,044 Teile Diallylphthalat einverleibt. Das Reaktionsgemisch wurde anschließend noch 3 Stunden bei 35 °C gerührt.

V Herstellung von Polyurethangruppen enthaltenden Polyisocyanuratschaumstoffen

Beispiele 15 bis 18

Zur Herstellung von harten Polyurethangruppen enthaltenden Polyisocyanuratschaumstoffen wurden die Komponente A, bestehend aus

80 Gew.-Teilen einer Kristallitsuspension,
1,0 Gew.-Teilen eines Schaumstabilisators auf Silikonbasis (DC 190 der Firma Dow Corning Corp., Midland),
0,62 Gew.-Teilen N,N-Dimethylaminocyclohexylamin,
5,13 Gew.-Teilen eines Polyisocyanuratkatalysators (Curithane 52 B der The Upjohn Comp.)
20,0 Gew.-Teilen Tris-(ß-chlorethyl)-phosphat und
42 Gew.-Teilen Trichlorfluormethan

und die Komponente B, bestehend aus
202 Gew.-Teilen einer Mischung aus Diphenylmethan-diisocyanaten und Polyphenyl-polymethylen-polyisocyanaten mit einem NCO-Gehalt von 31 Gew.%
bei Raumtemperatur 20 Sekunden lang intensiv vermischt, die schaumfähige Mischung wurde in eine offene Form eingebracht und dort aufschäumen gelassen.

Die verwandten Kristallitsuspensionen und deren Mengen, die Verschäumungsdaten sowie die an den erhaltenen Schaumstoffen gemessenen mechanischen Eigenschaften sind in der folgenden Tabelle zusammengefaßt.

Vergleichsbeispiel F

Man verfuhr analog den Angaben der Beispiele 15 bis 18, verwandte jedoch eine Kristallitsuspension, hergestellt nach Angaben der EP-OS 62 204, Beispiel 3 und setzte anstelle von 20 Gew.-Teilen 30,43 Gew.-Teile Tris-(ß-chlorethyl)-phosphat ein.

Tabelle

Beispiele 15 bis 18 und Vergleichsbeispiel F

| Beispiele<br>Vergleichsbeispiel | | 15 | 16 | 17 | 18 | F |
|---|---|---|---|---|---|---|
| Kristallitsuspensionen nach | | | | | | |
| Beispiel 4 (Gew.-Teile) | | 80 | - | - | - | - |
| Beispiel 7 (Gew.-Teile) | | - | 80 | - | - | - |
| Beispiel 9 (Gew.-Teile) | | - | - | 80 | - | - |
| Beispiel 14 (Gew.-Teile) | | - | - | - | 80 | - |
| EP-OS 62 204 (Gew.-Teile)<br>Beispiel 3 | | | | | | 69,57 |
| Verschäumungsdaten und mechanische Eigenschaften: | | | | | | |
| Startzeit | [sek] | 29 | 29 | 30 | 30 | 38 |
| Abbindezeit | [sek] | 128 | 116 | 135 | 140 | 140 |
| Steigzeit | [sek] | 260 | 240 | 240 | 235 | 260 |
| Sprödigkeitsverhalten | | gut | gut | gut | gut | mittel |
| Schrumpf | | kein | kein | minimal | kein | minimal |
| Zellgröße | | mittel | mittel | mittel | mittel | mittel |
| Brandverhalten gemssen nach der EMPA-Norm | | V/3 | V/3 | V/3 | V/3 | V/2 |
| Rauchgasdichte | [%] | 46 | 46 | 47 | 50 | 68 |

Tabelle: Fortsetzung

| | | | | | | |
|---|---|---|---|---|---|---|
| Beispiele | | 15 | 16 | 17 | 18 | |
| Vergleichsbeispiel | | | | | | F |
| Raumgewicht | [g/l] | 36,4 | 35,7 | 36,3 | 36 | 36,4 |
| Druckfestigkeit n.DIN 43421 | [$N/mm^2$] | 0,247 | 0,238 | 0,243 | 0,260 | 0,198 |
| Biegefestigkeit n.DIN 53452 | [$N/mm^2$] | 0,369 | 0,356 | 0,369 | 0,370 | 0,328 |
| Dimensionsstabilität | [%] | 0,1/-0,1/-0,2 | 0,1/-0,1/0,2 | 0,1/-0,1/-0,2 | 0,1/-0,1/0,1 | 0/0/-0,2 |
| " in der Wärme | [%] | -0,5/1,5/0,5 | -0,9/2,1/-0,4 | -0,5/1,0/0,6 | -0,5/1,0/-0,3 | -1,8/3,7/2,8 |
| Geschlossene Zellen | [%] | 84,5 | 84,2 | 84 | 84 | 83,4 |

## Ansprüche

1. Kristallitsuspensionen, die enthalten
   a) 3 bis 70 Gew.% eines kristallinen, ethylenisch ungesättigten Polyesters, hergestellt durch Polykondensation von Fumarsäure und Ethylenglykol im Molverhältnis 1:1,2 bis 2, wobei bis zu 18 Mol.% der Fumarsäure durch aliphatische, cycloaliphatische und/oder aromatische Carbonsäuren und bis zu 20 Mol.% des Ethylenglykols durch andere Alkohole ersetzt sein können, mit einem Molekulargewichtsfaktor pro Doppelbindung von 154,4 bis 408 als disperse Phase und
   b) 30 bis 97 Gew.% einer Polyhydroxylverbindung mit einer Funktionalität von 2 bis 8, einer Hydroxylzahl von 20 bis 800 und einem Schmelzpunkt unter 30° C als kohärente Phase,
   wobei die Gew.-%e bezogen sind auf das Gesamtgewicht der Komponenten (a) und (b).

2. Kristallitsuspensionen nach Anspruch 1, dadurch gekennzeichnet, daß sie 0,1 bis 7 Gew.-Teile, pro 100 Gew.-Teile der Kristallitsuspension aus den Komponenten (a) und (b), eines aliphatischen, cycloaliphatischen und/oder araliphatischen primären und/oder sekundären Amins, Dialkylentriamins und/oder Alkanolamins enthalten, die mit der ethylenisch ungesättigten Doppelbindung des Polyesters (a) eine Additionsreaktion analog der Michael-Reaktion eingehen.

3. Kristallitsuspensionen nach Anspruch 2, dadurch gekennzeichnet, daß sie als aliphatische Amine Verbindungen der Formel
   $H_2N-(CR^1R^2)_n-NR^3-(CR^1R^2)_m-X$
   enthalten, in der bedeuten:
   $R^1$, $R^2$, $R^3$ gleiche oder verschiedene Alkylreste mit 1 bis 4 Kohlenstoffatomen und/oder Wasserstoffatome,
   X eine $NH_2$- oder OH-Gruppe,
   n eine ganze Zahl von 2 bis 12 und
   m eine ganze Zahl von 2 bis 3.

4. Kristallitsuspensionen nach Anspruch 1, dadurch gekennzeichnet, daß sie 1 bis 50 Gew.-Teile, pro 100 Gew.-Teile der Kristallitsuspension aus den Komponenten (a) und (b), eines aliphatischen, cycloaliphatischen oder aromatischen Chlor- und/oder Bromkohlenwasserstoffs enthalten.

5. Kristallitsuspensionen nach Anspruch 4, dadurch gekennzeichnet, daß sie als aliphatische, cycloaliphatische oder aromatische Chlor- und/ oder Bromkohlenwasserstoffe, Chlorparaffine mit einem Chlorgehalt von 20 bis 75 Gew.%, Hexabromcyclododecan und/oder Oktabrombiphenyl enthalten.

6. Kristallitsuspensionen nach Anspruch 1, dadurch gekennzeichnet, daß sie 1 bis 50 Gew.-Teile, pro 100 Gew.-Teile der Kristallitsuspension aus den Komponenten (a) und (b), mindestens einer ethylenisch ungesättigten monomeren Verbindung enthalten, die mit der ethylenisch ungesättigten Doppelbindung des Polyesters (a) copolymerisiert werden kann.

7. Kristallitsuspensionen nach Anspruch 1, dadurch gekennzeichnet, daß sie 0,05 bis 5 Gew.-Teile, pro 100 Gew.-Teile der Kristallitsuspension aus den Komponenten (a) und (b), eines Radikalbildners enthalten.

8. Kristallitsuspensionen nach Anspruch 1, dadurch gekennzeichnet, daß sie aliphatische, cycloaliphatische oder aromatische Chlor- und/oder Bromkohlenwasserstoffe und/oder ethylenisch ungesättigte monomere Verbindungen und Radikalbildner enthalten.

9. Verfahren zur Herstellung von Kristallitsuspensionen, dadurch gekenn zeichnet, daß man
   a) 3 bis 70 Gew.-Teile eines kristallinen, ethylenisch ungesättigten Polyesters, hergestellt durch Polykondensation von Fumarsäure und Ethylenglykol im Molverhältnis 1:1,2 bis 2, wobei bis zu 18 Mol.% der Fumarsäure durch aliphatische, cycloaliphatische und/oder aromatische Carbonsäuren und bis zu 20 Mol.% des Ethylenglykols durch andere Alkohole ersetzt sein können, mit einem

Molekulargewichtsfaktor pro Doppelbindung von 154,4 bis 408 in
b) 30 bis 97 Gew.-Teilen einer Polyhydroxylverbindung mit einer Funktionalität von 2 bis 8, einer Hydroxylzahl von 20 bis 800 und einem Schmelzpunkt unter 30 ° C bei Temperaturen von 35 bis 160 ° C löst und die Lösung unter Einwirkung von Scherkräften zur Ansbildung der Kristallitsuspension abkühlen läßt.

**10.** Verwendung von Kristallitsuspensionen nach Anspruch 1 zur Herstellung von kompakten oder zelligen Polyurethan- oder Polyurethangruppen enthaltenden Polyisocyanurat-Kunststoffen.

## Claims

**1.** A crystallite suspension containing
a) from 3 to 70% by weight of a crystalline ethylenically unsaturated polyester prepared by polycondensation of fumaric acid and ethylene glycol in a molar ratio of 1:(1.2-2), in which up to 18 mol % of the fumaric acid may have been replaced by an aliphatic, cycloaliphatic or aromatic carboxylic acid and up to 20 mol % of the ethylene glycol by another alcohol, having a molecular weight factor per double bond of from 154.4 to 408 as disperse phase and
b) from 30 to 97% by weight of a polyhydroxy compound having a functionality of from 2 to 8, a hydroxyl number of from 20 to 800 and a melting point below 30 ° C as coherent phase, the weight %ages being based on the total weight of components (a) and (b).

**2.** A crystallite suspension as claimed in claim 1, which contains from 0.1 to 7 parts by weight, per 100 parts by weight of the crystallite suspension of components (a) and (b), of an aliphatic, cycloaliphatic or araliphatic primary or secondary amine, dialkylenetriamine or alkanolamine which undergoes with the ethylenically unsaturated double bond of polyester (a) an addition reaction similar to a Michael reaction.

**3.** A crystallite suspension as claimed in claim 2, which contains an aliphatic amine which is a compound of the formula

$$H_2N\text{-}(CR^1R^2)_n\text{-}NR^3\text{-}(CR^1R^2)_m\text{-}X$$

where $R^1$, $R^2$ and $R^3$ are each identical or different alkyl of from 1 to 4 carbon atoms or hydrogen, X is $NH_2$, or OH, n is an integer from 2 to 12 and m is an integer from 2 to 3.

**4.** A crystallite suspension as claimed in claim 1, which contains from 1 to 50 parts by weight, per 100 parts by weight of the crystallite suspension of components (a) and (b), of an aliphatic, cycloaliphatic or aromatic chloro- or bromo-hydrocarbon.

**5.** A crystallite suspension as claimed in claim 4, wherein the aliphatic, cycloaliphatic or aromatic chloroor bromo-hydrocarbon is a chloroparaffin having a chlorine content of from 20 to 75% by weight, hexabromocyclododecane or octabromobiphenyl.

**6.** A crystallite suspension as claimed in claim 1, which contains from 1 to 50 parts by weight, per 100 parts by weight of the crystallite suspension of components (a) and (b), of at least one ethylenically unsaturated monomeric compound which can be copolymerized with the ethylenically unsaturated double bond of polyester (a).

**7.** A crystallite suspension as claimed in claim 1, which contains from 0.05 to 5 parts by weight, per 100 parts by weight of the crystallite suspension of components (a) and (b), of a free radical former.

**8.** A crystallite suspension as claimed in claim 1, which contains an aliphatic, cycloaliphatic or aromatic chloro- or bromo-hydrocarbon or an ethylenically unsaturated monomeric compound and a free radical former.

**9.** A process for preparing a crystallite suspension, which comprises dissolving
a) from 3 to 70 parts by weight of a crystalline ethylenically unsaturated polyester prepared by polycondensation of fumaric acid and ethylene glycol in a molar ratio of 1:(1.2 - 2), in which up to 18 mol % of the fumaric acid may have been replaced by an aliphatic, cycloaliphatic or aromatic carboxylic acid and up to 20 mol % of the ethylene glycol by another alcohol, having a molecular

weight factor per double bond of from 154.4 to 408 in
b) from 30 to 97 parts by weight of a polyhydroxy compound having a functionality of from 2 to 8, a hydroxyl number of from 20 to 800 and a melting point below 30°C at from 35 to 160°C and cooling the solution with the application of shearing forces to form the crystallite suspension.

**10.** The use of a crystallite suspension as claimed in claim 1 for producing a compact or cellular polyurethane plastic or a compact or cellular polyisocyanurate plastic that contains polyurethane groups.

## Revendications

**1.** Suspensions de cristallites, qui contiennent
a) 3 à 70% en poids d'un polyester à insaturation éthylénique, cristallin, préparé par la polycondensation de l'acide fumarique et de l'éthylène-glycol dans le rapport molaire de 1:1,2 à 2, où jusqu'à 18% molaires de l'acide fumarique peuvent être remplacés bar des acides carboxyliques aliphatiques, cycloaliphatiques et/ou aromatiques et jusqu'à 20% molaires de l'éthylène-glycol peuvent être remplacés par d'autres alcools, avec un facteur de poids moléculaire par double liaison de 154,4 à 408, à titre de phase dispersée et
b) 30 à 97% an poids d'un composé polyhydroxylé possédant une fonctionnalité de 2 à 8, un indice d'hydroxyle de 20 à 800 et un point de fusion inférieur à 30°C, à titre de phase cohérente,
où les pourcentage pondéraux se rapportent au poids global des composants (a) et (b).

**2.** Suspensions de cristallites suivant la revendication 1, caractérisées en ce qu'elles contiennent de 0,1 à 7 parties en poids, par 100 parties en poids de la suspension des cristallites des composants (a) et (b), d'une alcanolamine, d'une dialkylènetriamine et/ou d'une amine aliphatique, cycloaliphatique et/ou aralaliphatique, primaire et/ou secondaire, qui sont susceptbiles de subir une réaction d'addition analogue à la réaction de Michael avec la double liaison à insaturation éthylénique du polyester (a).

**3.** Suspensions de cristallites suivant la revendication 2, caractérisées en ce qu'elles contiennent, à titre d'amines aliphatiques, des composés de la formule

$$H_2N-(CR^1R^2)_n-NR^3-CR^1R^2)_m - X$$

dans laquelle
$R^1$, $R^2$, $R^3$ représentent des radicaux alkyle identiques ou différents, comportant de 1 à 4 atomes de carbone et/ou des atomes d'hydrogène,
X représente un radical $NH_2$ ou OH
n représente un nombre entier dont la valeur varie de 2 à 12 et
m représente un nombre entier égal à 2 ou à 3.

**4.** Suspensions de cristallites suivant la revendication 1, caractérisées en ce qu'elles contiennent de 1 à 50 parties en poids, par 100 parties en poids de la suspension de cristallites des composants (a) et (b), d'un chloro- et/ou bromo-hydrocarbure aliphatique, cycloaliphatique ou aromatique.

**5.** Suspensions de cristallites suivant la revendication 4, caractérisées en ce qu'elles contiennent, à titre de chloro- et/ou bromohydrocarbures aliphatiques, cycloaliphatiques ou aromatiques, des chloroparaffines possédant une teneur en chlore de 20 à 75% en poids, de l'hexabromocyclododécane et/ou de l'octabromobiphényle.

**6.** Suspensions de cristallites suivant la revendication 1, caractérisées en ce qu'elles contiennent de 1 à 50 parties en poids, par 100 parties en poids de la suspension de cristallites des composants (a) et (b), d'au moins un composé monomère à insaturation éthylénique, qui peut être copolymérisé avec la double liaison à insaturation éthylénique du polyester (a).

7. suspensions de cristallites suivant la revendication 1, caractérisées en ce qu'elles contiennent de 0,05 à 5 parties en poids, par 100 parties en poids de la suspension de cristallites des composants (a) et (b), d'un agent radicalogène.

8. Suspensions de cristallites suivant la revendication 1, caractérisées en ce qu'elles contiennent des chloro- et/ou bromo-hydrocarbures aliphatiques, cycloaliphatiques ou aromatiques et/ou des composés monomères à insaturation éthylénique et des agents radicalogènes.

9. Procédé de préparation de suspensions de cristallites, caractérisé en ce qu'on dissout
a) 3, à 70 parties en poids d'un polyester à insaturation éthylénique, cristallin, préparé par la polycondensation de l'acide fumarique et de l'éthylène-glycol dans le rapport molaire de 1:1,2 à 2, où jusqu'à 18% molaires de l'acide fumarique peuvent être remplacés par des acides carboxyliques aliphatiques, cycloaliphatiques et/ou aromatiques et jusqu'à 20% molaires de l'éthylène-glycol peuvent être remplacés par d'autres alcools, avec un facteur de poids moléculaire par double liaison de 154,4 à 408,
dans
b) 30 à 70 parties en poids d'un composé polyhydroxylé possédant une fonctionnalité de 2 à 8, un indice d'hydroxyle de 20 à 800 et un point de fusion inférieur à 30 °C,
à des températures de 35 à 160 °C et
on laisse refroidir la solution sous l'effet de forces de cisaillement en vue de la formation de la suspension de cristallites.

10. Utilisation de suspensions de cristallites suivant la revendication 1 en vue de la fabrication de matières plastiques compactes ou cellulaires, de polyuréthane ou de polyisocyanurate contenant des radicaux polyuréthane.